# EUROPEAN PATENT SPECIFICATION

(11) **EP 1 572 410 B1**
(45) Date of publication and mention of the grant of the patent: **16.12.2009**
(21) Application number: 03754338.6
(22) Date of filing: 21.10.2003
(51) Int. Cl.: B23K 7/10, B23K 9/00, B23K 15/08, B23K 26/16, B23K 37/04, B23Q 11/00

(54) **AN APPARATUS AND A METHOD FOR CLEANING ELONGATE CARRIER MEMBERS**
VORRICHTUNG UND VERFAHREN ZUR REINIGUNG LÄNGLICHER TRÄGERELEMENTE
APPAREIL ET PROCEDE POUR NETTOYER DES ELEMENTS SUPPORTS ALLONGES

(30) Priority: 11.11.2002 SE 0203315
(43) Date of publication of application: 14.09.2005
(73) Proprietor: WELAND AB, 333 28 Smalandsstenar (SE)
(72) Inventor: VIRMALAINEN, Juha, S-333 33 Sm landsstenar (SE)
(74) Representative: Wallengren, Yngvar
(86) International application number: PCT/SE2003/001624
(87) International publication number: WO 2004/043638

(56) References cited:
- JP-A- 4 294 961
- JP-A- 10 193 128
- JP-A- 11 192 548
- DATABASE WPI Week 200016, Derwent Publications Ltd., London, GB; Class G05, AN 2000-175619, XP002990430 & JP 2000 024790 A (SHIBUTANI KOGYO KK) 25 January 2000
- PATENT ABSTRACTS OF JAPAN vol. 2000, no. 26 01 July 2002 & JP 2001 259828 A (KURIMOTO LTD) 25 September 2001

## Description

### TECHNICAL FIELD

The present invention relates to an apparatus for cleaning elongate carrier members which are disposed for supporting workpieces which are processed in such a manner that impurities or waste, products from the processing, such as slag, adhere to the carrier members.

The present invention also relates to a method of removing impurities or waste products, such as slag, from a carrier member which is employed for supporting a workpiece being processed and which, during the processing, is given a layer or a more or less lumped or irregular coating of adhering waste products.

### BACKGROUND ART

In the laser cutting of sheet material, the sheet which is to be cut is placed on a carrier arrangement comprising a plurality of mutually approximately parallel carrier members. The carrier members are in the form of elongate rails standing on edge and whose upper edges undulate in shape so that there are formed, along a carrier member, a plurality of support points. The carrier members or rails are disposed with a few centimetres' mutual spacing so that the support points on all carrier members lie in a common plane. At their lower edges, the individual carrier members are united to one another to form a continuous unit which forms the carrier arrangement.

On cutting using laser, a jet of molten metal, slag or other waste products occurs which departs at high speed downwards from the underside of the cut metal sheet. Naturally, these waste products impinge on the rails when an incision line passes over such a rail, the jet of waste products striking the rail from above and adhering to it.

After a certain period of cutting, the carrier arrangement will be so severely polluted that its flatness can no longer be guaranteed. The accumulation of waste products may also be so severe that direct disruption to the cutting operation occurs.

In order to restore the carrier arrangement to its pristine condition, it must be regularly cleaned of adhering waste products, a process that has hitherto been carried out manually using hoes, picks, scrapers and similar implements. Such work is extremely time-consuming and in practice entails that a laser cutter may need to be rendered inoperative for several hours in order to have time to carry out the necessary cleaning of the carrier arrangement.

The carrier arrangement may, on numerous occasions, be of considerable dimensions so that it will be difficult and inconvenient to reach from the edge of the carrier arrangement into its centre. This means that the cleaning work will be extremely fatiguing and inconvenient.

Usually, the rails included in the carrier arrangement are made of copper, which is a soft and relatively fragile material. This entails that the risk of damage to the rails cannot be underestimated if the cleaning operation is carried out using, for example, picks, hammers or chisels.

The above-described problem is not only topical in laser cutting, but instead corresponding problems are encountered also in other types of processing, such as cutting with gas, certain types of grinding operations, cutting with a cutting disc, etc.

### PROBLEM STRUCTURE

The present invention has for its object to obviate the problems from which the prior art technology suffers. In particular, the present invention has for its object to realise a possibility of carrying out the cleaning of the carrier members in a rapid and convenient manner so that operational down times for the laser cutter will be minimal at the same time as the cleaning operation is facilitated and the risk of damage to the individual carrier members is eliminated.

### SOLUTION

The objects forming the basis of the present invention will be attained in respect of the apparatus if this is characterised by a guide member which is disposed to be moved along the carrier member, a cleaning device movable in relation to the guide member and having at least one movement component which is directed from the carrier member towards the guide member, the cleaning device having engagement means disposed to engage with waste products adhering on the carrier member.

Concerning the method, the objects of the present invention will be attained if the method is characterised in that a cleaning device is moved along the carrier member and is caused to engage with and act on waste products adhering thereon at least in one direction which is substantially opposed to the direction in which the waste products were deposited on the carrier member.

### BRIEF DESCRIPTION OF THE ACCOMPANYING DRAWINGS

The present invention will now be described in greater detail hereinbelow, with reference to the accompanying Drawings. In the accompanying Drawings:
- Fig. 1: is a vertical front elevation of an apparatus according to the present invention;
- Fig. 2: is a vertical side elevation of the apparatus of Fig. 1;
- Fig. 3: is a cross section through a carrier member which has been subjected to cleaning in a first embodiment of the present invention;
- Fig. 4: is a top plan view of the apparatus of Figs. 1 and 2;
- Fig. 5: is a partial view from above of the apparatus of Fig. 4; and
- Fig. 6: is a cross section through a carrier member which is in the process of being cleaned in a second embodiment of the present invention.

### DESCRIPTION OF PREFERRED EMBODIMENT

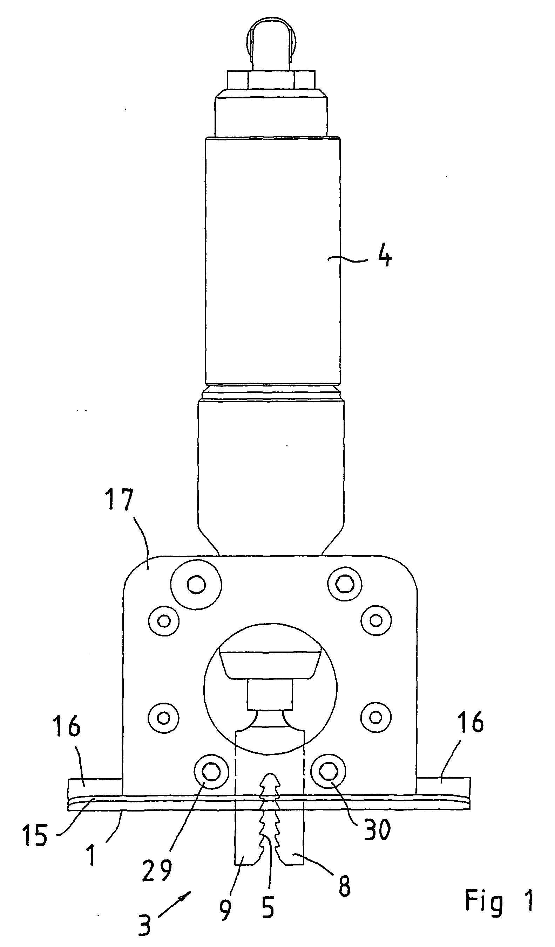

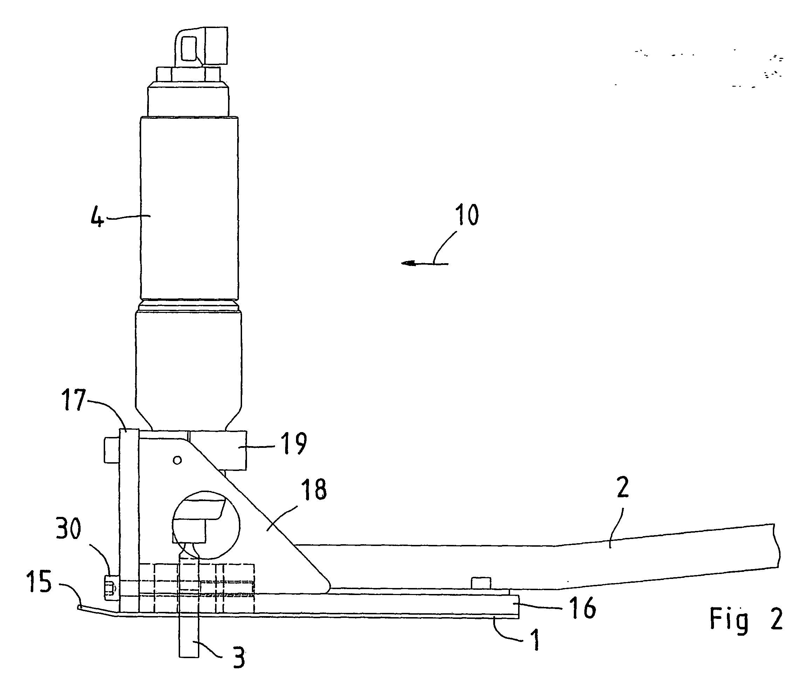

It will be apparent from Figs. 1 and 2 taken together that the cleaning apparatus has a bottom plate 1 which fulfils the function of a guide member and which is disposed to guide the apparatus according to the present invention along a carrier member or a rail which is to be cleaned. The bottom plate 1 is of such a width that it can rest on more than one rail, preferably three rails in the carrier arrangement in which the rails are included. In the bottom plate 1, there is secured a shaft or operating handle 2 which is of such a length that the apparatus according to the present invention may conveniently be moved in at least to the centre of the carrier arrangement which is to be cleaned when the operator of the apparatus according to the present invention stands beside the carrier arrangement. In such instance, the bottom plate 1 slides on the carrier arrangement and in the longitudinal direction of the individual carrier members which are to be cleaned.

It will be apparent from the Figures that the cleaning apparatus has a cleaning device 3 which is disposed on the underside of the bottom plate and which extends through an aperture therein. The cleaning device 3 is connected to a drive motor 4 by means of which it may be set in reciprocating motion transversely of the plane of extent of the bottom plate, i.e. in a direction upwards and downwards in Figs. 1 and 2 and transversely of the upper edge of a carrier member (not shown).

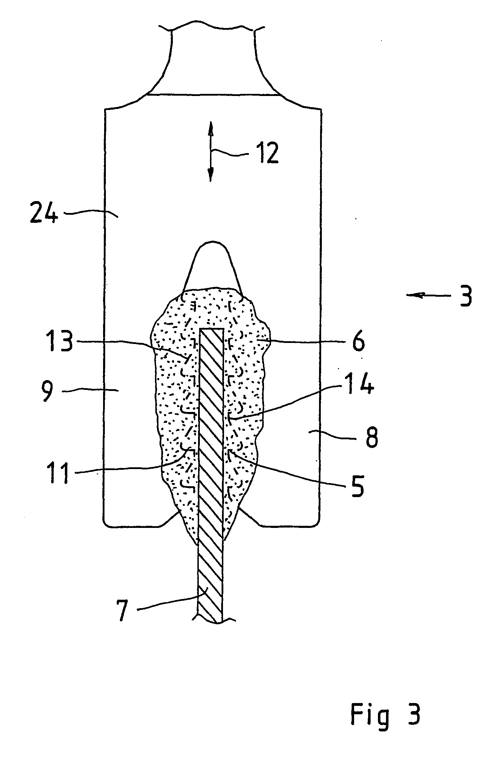

It follows from the foregoing that the cleaning device at least has one movement component which is directed from the carrier member to the guide member, i.e. the bottom plate 1. The cleaning device has engagement means 5 in the form of teeth which are disposed to engage with waste products 6 (Fig. 3) adhering on the carrier member in order to exercise a force against the waste products which is counter-directed to the direction in which the waste products were deposited on the carrier member 7. The above-described force action on the waste products 6 entails that they are subjected to a shearing force where the shearing plane is approximately parallel with opposing side surfaces of the carrier member 7.

It will be apparent from Figs. 1 and 3 that the cleaning device 3 is in the form of a fork which straddles the carrier member 7 and which has the teeth 5 disposed on the sides of the fork prongs facing towards one another, while The front and rear sides of the cleaning device 3 are " completely smooth. The free space between the fork prongs 8 and 9 measured between the tips of the teeth 5 amounts to approx. 1.2-1.7 times the thickness of the carrier member 7, preferably approx. 1.4 times this thickness. The term front side is here taken to signify the left-hand side of the cleaning device 3 in Fig. 2, while the rear side consists of the right-hand side of the cleaning device in Fig. 2, since, in normal operation, the apparatus according to the present invention is moved in the direction of the arrow 10 from right to left in Fig. 2. This notwithstanding, cleaning may also be carried out when the operators pulls the apparatus according to the present invention towards him, i.e, in a direction opposite to that of the arrow 10.

It will be apparent from Fig. 3 that the teeth have upper engagement surfaces 11 which are transversely directed, preferably approximately at right angles to the movements of the cleaning device 3 according to the arrow 12. The teeth 5 further have lower surfaces 13 which make an acute angle with the direction of movement 12. Those edges, of the upper engagement surface 11, which are located most proximal the carrier member 7 are adjacent a narrow, vertical surface 14 which, in the normal position of use of the apparatus according to the present invention, is substantially parallel with the adjacent side surface of the carrier member 7. The extent in the vertical direction of the vertical surfaces 14 is slight in relation to the pitch of the teeth 5.

It will be apparent from Figs. 1 and 2 that the bottom plate 1 has an upwardly folded front portion 15 whose purpose is to facilitate the advancement of the apparatus according to the present invention in accordance with the arrow 10 along the carrier member 7 even though the upper edge of the carrier member is per se undulating and is moreover coated with waste products 6 which may have an uneven upper edge and which may consist of extremely hard and abrasive materials. In order to reduce the friction between the carrier member 7 and the waste products 6 adhering thereon, the bottom plate 1 has a smooth and even underside and also consists of a hard material, for example spring steel. It should be observed that the bottom plate fulfils the function of a wear plate which, on the one hand, is subjected to a grinding or scratching action from the waste products and which, on the other hand, is placed under stress by vibrating or impacting reaction forces from the engagement of the cleaning device 3 with the waste products 6. These vibrating or impacting reaction forces are transversely directed in relation to the plane of the bottom plate or wear plate 1.

On the upper side of the bottom plate 1, the apparatus according to the present invention has a base plate 16 which is produced from a lighter material, for example aluminium, and which serves for securing other components included in the apparatus according to the present invention. Thus, the handle 2 is secured in the base plate 16 by screw unions.

In the front end of the base plate 16 (the left-hand end in Fig. 2), there is secured an end plate 17 which is supported by means of side plates 18, one on either side of the cleaning device 3.

In addition, there is also a drive motor 4. Along the upper edge of the end plate 17, there is provided a top plate 19 which serves for securing the drive motor 4.

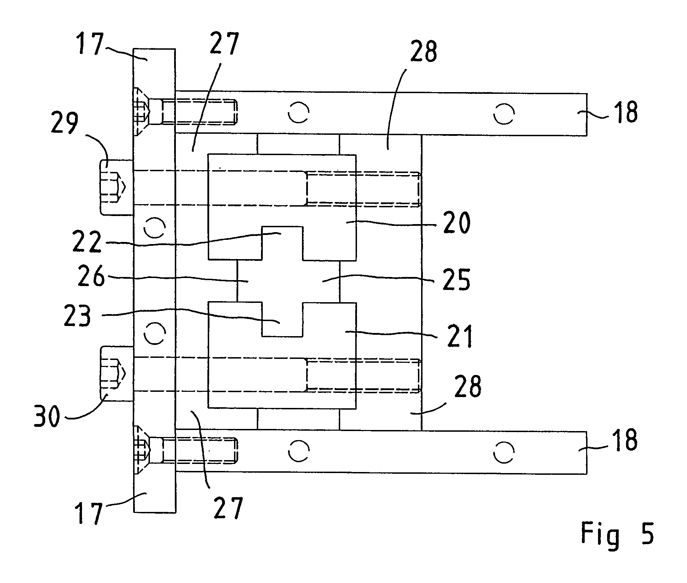

The two side plates 18 and the end plate 17 form a unit shown in Fig. 5 which serves for securing a guide for the cleaning device 3. The guide comprises two opposing guide blocks 20 and 21 which are manufactured from a durable material possessing low friction in relation to the cleaning device 3, for example a suitable plastic material. Both of the guide blocks 20 and 21 have mutually facing recesses 22 and 23, respectively, which together define an aperture in which the portion 24 of the cleaning device 3 located over the fork prongs 8 and 9 is accommodated. In that the front and rear sides of the cleaning device 3 are smooth, the cleaning device will be well guided in the recesses 22 and 23, whereby flexural forces which occur on displacing the apparatus according to the present invention in accordance with the arrow 10 (or opposite to this direction) will be absorbed by the guide blocks 20 and 21 and will thereby be prevented from having any direct effect on the drive motor 4.

It should be observed that the two guide blocks 20 and 21 do not meet one another but have gaps 25 and 26 between them which correspond to apertures in both the bottom plate 1 and the base plate 16. The purpose of these gasp and apertures is to facilitate the removal of loosened waste products 6 by there being provided in the drive motor a blower which acts against these gaps.

The two guide blocks 20 and 21 are readily replaceable in that they are fixedly clamped between a cross piece 27 and a yoke 28 which, by means of screws 29 and 30, may be tightened against the cross piece 27. In such instance, both of the guide blocks 20 and 21 have free-going bores for accommodating the screws 29 and 30.

### DESCRIPTION OF ALTERNATIVE EMBODIMENTS

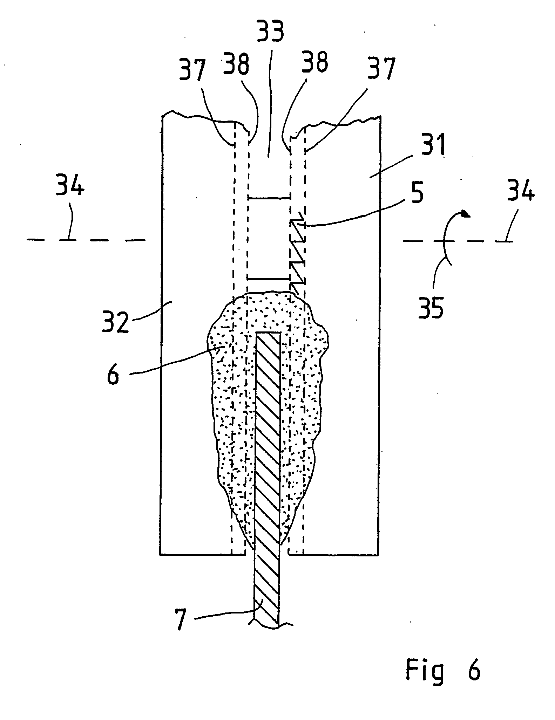

Fig. 6 shows an alternative of the above-described cleaning device. The cleaning device in the embodiment according to Fig. 6 comprises two discs 31 and 32 which have a space 33 between them. The discs 31 and 32 are circular and are rotary about a common axis of rotation 34 in accordance with the arrow 35.

In the Figure, the two discs are interconnected by the intermediary of a connecting shaft 36 so that together they form a rigid unit.

On their sides facing towards one another at least along a peripheral band, the discs 31 and 32 have teeth 5 which are only partly shown in Fig. 6 but which are intimated by the broken lines 37 and 38. The teeth 5 may have the same design as that described above with reference to Fig. 3. The direction of movement of the teeth 5 in the area where they engage with the waste products 6 on the carrier member 7 is upwards, i.e. from the waste products towards the bottom plate 1 not shown in the Figure.

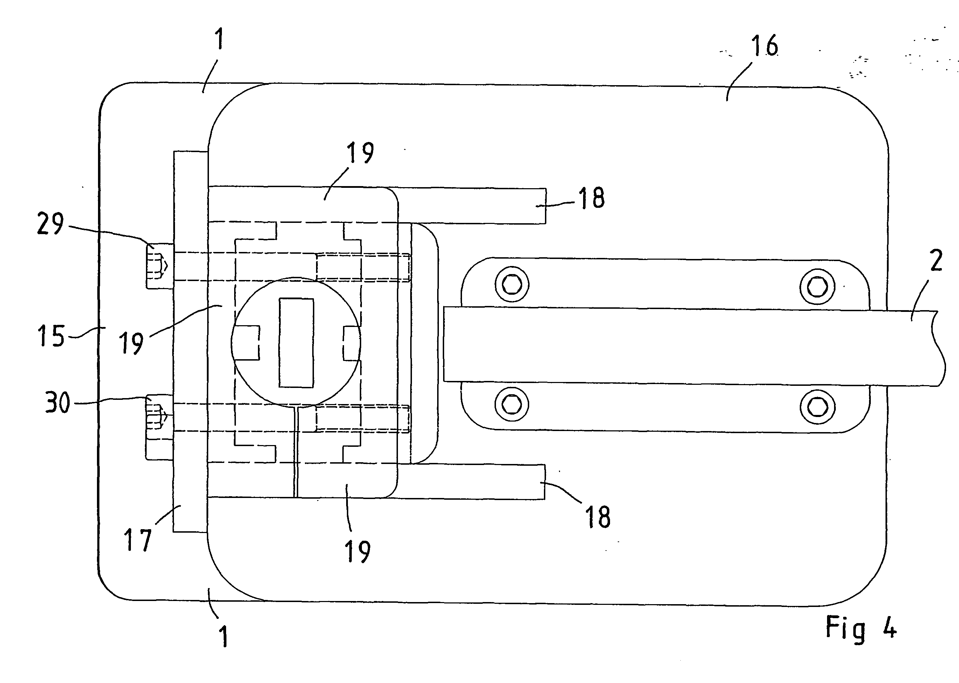

It will be apparent from the Figure that the width of the free space 33 between the tips of the teeth 5 is greater than the thickness of the carrier member 7. Suitably, the width of the space 33 may amount to approx. 1.2-1.7 times the thickness of the carrier member 7, suitably approx. 1.4 times this thickness. The same relationship applies concerning the fork-shaped cleaning device in the embodiment according to Figs. 1-5.

In yet a further alternative embodiment, the cleaning device may include a rotary cleaning body disposed on either side of the carrier member 7 and which may be likened to an axial long gear wheel or a shank cutter. The cleaning bodies have axes of rotation which are parallel with the surfaces of the carrier member 7 but which slope in relation to the longitudinal direction thereof so that the lower ends of the cleaning bodies in Fig. 2 would be located to the left of their upper ends located at the bottom plate 1, i.e. would lie first in the direction of rotation according to the arrow 10. The cleaning bodies rotate in opposite directions so that they exercise a force on the affected waste products which is directed up towards the bottom plate 1 but possibly also forwards in the direction of advancement 10. Also in this embodiment, the free distance between the peripheries of the cleaning bodies is greater than the thickness of the carrier member 7.

## Claims

1. An apparatus for cleaning elongate carrier members (7) which are disposed for supporting workpieces which are processed in such a manner that impurities or waste products (6) from the processing, such as slag, adhere to the carrier members, **characterised by** a guide member (1) which is disposed to be moved along the carrier member (7), a cleaning device (3; 31, 32) movable in relation to the guide member and which at least has one movement component which is directed from the carrier member to the guide member, the cleaning device having engagement means (5) disposed to engage with waste products (6) adhering on the carrier member.

2. The apparatus as claimed in Claim 1, where the carrier member (7) is in the form of an elongate rail standing on edge and which, with its upper edge surface is disposed to carry the workpiece and which is disposed a distance from but along additional rails included in a carrier arrangement, **characterised in that** the guide member (1) is of an extent, transversely of the longitudinal direction of the rail (7), which is sufficiently great to permit the guide member to rest on more than one but preferably three adjacent rails.

3. The apparatus as claimed in Claim 2, **characterised in that** the cleaning device (3) extends through an aperture in the guide member (1) which is in the form of a plate, the cleaning device being movable towards and away from the plate.

4. The apparatus as claimed in Claim 3, **characterised in that** the cleaning device (3) is movable approximately at right angles to the plate (1) in a linear reciprocating movement.

5. The apparatus as claimed in any of Claims 2 to 4, **characterised in that** the cleaning device (3) is in the form of a fork which is disposed to straddle the rail (7).

6. The apparatus as claimed in Claim 5, **characterised in that** the engagement means (5) are in the form of teeth which are disposed on sides of the prongs (8, 9) of the fork facing towards one another.

7. The apparatus as claimed in Claim 5 or 6, **characterised in that** the free width interiorly in the fork is approximately 1.2-1.7 times the thickness of the rail (7).

8. The apparatus as claimed in Claim 7, **characterised in that** the teeth (5) have upper engagement surfaces (11) which are directed transversely of the reciprocating movements of the cleaning device (3), and lower surfaces (13) which make an acute angle with this direction.

9. The apparatus as claimed in any of Claims 1 or 2, **characterised in that** the cleaning device includes two rotary discs (31, 32) or bodies, one on each side of the rail (7), said bodies being rotary about a common axis (34) which is substantially parallel with a support plane for the carrier arrangement and which is transversely directed in relation to the longitudinal direction of the rail (7).

10. The apparatus as claimed in Claim 9, **characterised in that** the engagement means (5) are disposed on the mutually facing surfaces of the bodies.

11. The apparatus as claimed in Claim 9 or 10, **characterised in that** the free distance between the bodies (31, 32) is approximately 1.2-1.7 times the thickness of the rail (7).

12. The apparatus as claimed in any of Claims 9 to 11, **characterised in that** the bodies (31, 32) are rotary in one direction so that the engagement means (5) on that side of the bodies which is turned to face forwards in the movement (10) of the guide member (1) along the rail (7) at least partly move from the rail towards the guide member which is in the form of a plate.

13. The apparatus as claimed in any of Claims 1 or 2, **characterised in that** the cleaning device includes a rotary body disposed on either side of the rail (7), the bodies each beings rotary about mutually substantially parallel axes which are substantially parallel with the side surfaces of the rail and which slope so that their portions located a distance from the guide member (1) are located above other portions seen in the direction of movement (10) of the guide member (1).

14. The apparatus as claimed in Claim 13, **characterised in that** the bodies have substantially cylindrical circumferential surfaces and that the engagement members are disposed thereon.

15. The apparatus as claimed in Claim 13 or 14, **characterised in that** the free distance between the bodies is approximately 1.2-1.7 times the thickness of the rail (7).

16. The apparatus as claimed in any of Claims 13 to 15, **characterised in that** the bodies are rotary in opposite directions so that the sides of the bodies facing towards the rail (7) move forwards (10) in the direction of movement of the guide member (1).

17. The apparatus as claimed in any of Claims 13 to 16, **characterised in that** the engagement means are disposed in helical form on the circumferential surfaces of the bodies in order to exercise a force on the waste products (6) which is at least partly directed from the rail (7) to the guide member (1) which is in the form of a plate.

18. A method of removing impurities or waste products (6) such as slag from a carrier member (7) which is employed for carrying a workpiece being processed and which, during the processing, is given a layer or a more or less lumped or irregular coating of adhering waste products, **characterised in that** a cleaning device (3; 31, 32) is moved along the carrier member (7) and is caused to engage with and act on waste products (6) adhering thereon least in a direction which is substantially opposed to the direction in which the waste products were deposited on the carrier member (7).

19. The method as claimed in Claim 18, **characterised in that** the cleaning device (3; 31, 32) is caused to act on the waste products (6) in one or more directions, which substantially realises a shearing between the waste products (6) and the carrier member (7).

20. The method as claimed in Claim 18 or 19, **characterised in that** the cleaning device (3; 31, 32) is caused to act on waste products (6) adhering on opposing sides of the carrier member (7) substantially simultaneously and synchronously.

21. The method as claimed in any of Claims 18 to 20, **characterised in that** the cleaning device (3; 31, 32) is moved along the longitudinal direction of the carrier member (7) at least in one direction of advancement (10).

22. The method as claimed in any of Claims 18 to 21, **characterised in that** the cleaning device (3; 31, 32) is caused to act on the waste products (6) in a direction which is substantially directed along the longitudinal direction of the carrier member (7).

## Patentansprüche

1. Vorrichtung zum Reinigen langgestreckter Trägerelemente (7), die zum Tragen von Werkstücken eingesetzt werden, welche Werkstücke derart bearbeitet werden, dass Verunreinigungen oder Reststoffe (6), wie beispielsweise Schlacke, aus dem Arbeitsverfahren an den Trägerelementen anhaften, **gekennzeichnet durch** ein Führungselement (1), das angeordnet ist, um entlang des Trägerelementes (7) bewegt zu werden, eine Reinigungsvorrichtung (3; 31, 32), die relativ zu dem Führungselement bewegt werden kann und die mindestens eine Bewegungskomponente aufweist, die in Richtung von dem Trägerelement zu dem Führungselement weist, wobei die Reinigungsvorrichtung Mittel (5) zum Angreifen an den Reststoffen (6) hat, die an dem Trägerelement anhaften.

2. Vorrichtung nach Anspruch 1, bei der das Trägerelement (7) in der Form einer hochkant stehenden länggestreckten Schiene ist, deren obere Randfläche zum Tragen des Werkstückes gestaltet ist und das in einem Abstand zu, jedoch zusammen mit zusätzlichen in einer Trägeranordnung umfassten Schienen angeordnet ist, **dadurch gekennzeichnet, dass** das Führungselement (1) transversal zur Längsrichtung der Schiene (7) so dimensioniert ist, dass es ausreichend groß ist, um dem Führungselement zu ermöglichen, auf mehr als einer und vorzugsweise auf dreien benachbarten Schienen zu ruhen.

3. Vorrichtung nach Anspruch 2, **dadurch gekennzeichnet, dass** sich die Reinigungsvorrichtung (3) durch eine Öffnung in dem Führungselement (1) erstreckt, das in der Form einer Platte vorliegt, wobei die Reinigungsvorrichtung in Richtung zu der und von der Platte weg bewegbar ist.

4. Vorrichtung nach Anspruch 3, **dadurch gekennzeichnet, dass** die Reinigungsvorrichtung (3) näherungsweise in rechten Winkeln zu der Platte (1) in einer linearen reziprokalen Bewegung bewegbar ist,

5. Vorrichtung nach einem der Ansprüche 2 - 4, **dadurch gekennzeichnet, dass** die Reinigungsvorrichtung (3) in der Form einer Gabel vorliegt, die angeordnet ist, entsprechend einem Reiterfuß auf der Schiene (7) zu sitzen.

6. Vorrichtung nach Anspruch 5, **dadurch gekennzeichnet, dass** die Mittel (5) zum Angreifen in der Form von Zähnen vorliegen, die auf den Seiten der Zinken (8, 9) der Gabel angeordnet sind, die einander gegenüber liegen.

7. Vorrichtung nach Anspruch 5 oder 6, **dadurch gekennzeichnet, dass** die in der Gabel vorliegende freie Breite näherungsweise 1,2 - 1,7 mal der Dicke der Schiene (7) entspricht.

8. Vorrichtung nach Anspruch 7, **dadurch gekennzeichnet, dass** die Zähne (5) obere Angriffsflächen (11) haben, die transversal zu den reziprokalen Bewegungen der Reinigungsvorrichtung (3) ausgerichtet sind, und untere Flächen (13), die in dieser Richtung einen spitzen Winkel bilden.

9. Vorrichtung nach einem der Ansprüche 1 oder 2, **dadurch gekennzeichnet, dass** die Reinigungsvorrichtung zwei Rotationsscheiben (31, 32) oder Körper aufweist, jeweils eine(n) auf jeder Seite der Schiene (7), wobei diese Körper um eine gemeinsame Achse (34) drehbar sind, die im Wesentlichen parallel zu einer Trägerebene für die Trägereinrichtung ist, und die relativ zur Längsrichtung der Schiene (7) in Querrichtung steht.

10. Vorrichtung nach Anspruch 9, **dadurch gekennzeichnet, dass** die Mittel (5) zum Angreifen auf den gegenüberliegenden Flächen der Körper angeordnet sind.

11. Vorrichtung nach Anspruch 9 oder 10, **dadurch gekennzeichnet, dass** der freie Abstand zwischen den Körpern (31, 32) näherungsweise 1,2 - 1,7 mal der Dicke der Schiene (7) entspricht.

12. Vorrichtung nach einem der Ansprüche 9 - 11, **dadurch gekennzeichnet, dass** die Körper (31, 32) in einer Richtung rotierbar sind, sodass die Mittel (5) zum Angreifen auf derjenigen Seite der Körper, die in Richtung der Bewegung (10) des Führungselementes (1) entlang der Schiene (7) gedreht sind, mindestens teilweise von der Schiene in Richtung zu dem Führungselement bewegbar sind, das in der Form einer Platte vorliegt.

13. Vorrichtung nach einem der Ansprüche 1 oder 2, **dadurch gekennzeichnet, dass** die Reinigungsvorrichtung einen auf beiden Seiten der Schiene (7) angeordneten RotaHonskörper aufweist, welche Körper um zueinander im Wesentlichen parallele Achsen rotierbar sind, die zu den Seitenflächen der Schiene im Wesentlichen parallel sind und die geneigt sind, sodass deren in einem Abstand von dem Führungselement (1) platzierten Abschnitte oberhalb anderer Abschnitte liegen, gesehen aus der Richtung der Bewegung (10) des Führungselementes (1).

14. Vorrichtung nach Anspruch 13, **dadurch gekennzeichnet, dass** die Körper im Wesentlichen zylindrische Außenumfangsflächen haben und dass die Mittel zum Angreifen darauf angeordnet sind.

15. Vorrichtung nach Anspruch 13 oder 14, **dadurch gekennzeichnet, dass** der freie Abstand zwischen den Körpern näherungsweise 1,2 - 1,7 mal der Dicke der Schiene (7) entspricht.

16. Vorrichtung nach einem der Ansprüche 13 - 15, **dadurch gekennzeichnet, dass** die Körper in entgegengesetzten Richtungen rotierbar sind, sodass die der Schiene (7) zugewandten Seiten der Körper in der Bewegungsrichtung (10) des Führungselementes (1) bewegbar sind.

17. Vorrichtung nach einem der Ansprüche 13 - 16, **dadurch gekennzeichnet, dass** die Mittel zum Angreifen spiralförmig auf den Außenumfangsflächen der Körper angeordnet sind, um eine Kraft auf die Reststoffe (6) aufzubringen, die zumindest teilweise von der Schiene (7) auf das Führungselement (1) gerichtet ist, das in der Form einer Platte vorliegt.

18. Verfahren zum Entfernen von Verunreinigungen oder Reststoffen (6), wie beispielsweise Schlacke, von einem Trägerelement (7), das zum Tragen eines Werkstückes eingesetzt wird, welches bearbeitet und auf dem während des Arbeitsschrittes eine Schicht oder eine mehr oder weniger erhebende oder irreguläre Beschichtung oder ein anhaftender Reststoff verbleibt, **dadurch gekennzeichnet, dass** eine Reinigungsvorrichtung (3; 31, 32) entlang des Trägerelementes (7) bewegt wird und in Eingriff mit und auf die darauf anhaftenden Reststoffe (6) wirkend gebracht wird, zumindest in einer Richtung, die im Wesentlichen entgegengesetzt zu der Richtung ist, in der die Reststoffe auf dem Trägerelement (7) abgelagert sind.

19. Verfahren nach Anspruch 18, **dadurch gekennzeichnet, dass** die Reinigungsvorrichtung (3; 31, 32) veranlasst wird, auf die Reststoffe (6) in einer oder in mehreren Richtungen zu wirken, die im Wesentlichen ein Abrasieren der Reststoffe (6) von dem Trägerelement (7) realisieren.

20. Verfahren nach Anspruch 18 oder 19, **dadurch gekennzeichnet, dass** die Reinigungsvorrichtung (3; 31, 32) veranlasst wird, auf die auf gegenüberliegenden Seiten des Trägerelementes (7) anhaftenden Reststoffe (6) im Wesentlichen gleichzeitig und synchron zu wirken.

21. Verfahren nach einem der Ansprüche 18 - 20, **dadurch gekennzeichnet, dass** die Reinigungsvorrichtung (3; 31, 32) entlang der Längsrichtung des Trägerelementes (7) zumindest in einer Richtung dieser Voranschreitung (10) bewegt wird.

22. Verfahren nach einem der Ansprüche 18 - 21, **dadurch gekennzeichnet, dass** die Reinigungsvorrichtung (3; 31, 32) dazu veranlasst wird, auf die Reststoffe (6) in einer Richtung zu wirken, die im Wesentlichen entlang der Längsrichtung des Trägerelementes (7) ausgerichtet ist.

## Revendications

1. Dispositif de nettoyage d'éléments de support allongés (7) qui sont disposés afin de supporter des pièces d'oeuvre qui sont traitées de telle manière que des impuretés ou produits formant déchet (6) provenant du traitement, tels que des scories, adhèrent aux éléments de support, **caractérisé par** un élément de guidage (1) qui est disposé de manière à être déplacé le long de l'élément de support (7), un dispositif de nettoyage (3 ; 31, 32) pouvant être déplacé par rapport à l'élément de guidage et qui présente au moins une composante de déplacement qui est dirigée à partir de l'élément de support vers l'élément de guidage, le dispositif de nettoyage comportant des moyens de couplage (5) disposés de manière se coupler avec les produits formant déchet (6) adhérant sur l'élément de support.

2. Dispositif selon la revendication 1, dans lequel l'élément de support (7) est sous la forme d'un rail allongé dressé sur un bord et qui, avec sa surface de bord supérieure est disposé de manière à supporter la pièce d'oeuvre et qui est disposé à une certaine distance de rails supplémentaires contenus dans un agencement support mais le long de ces derniers, **caractérisé en ce que** l'élément de guidage (1) présente une étendue, transversalement dans la direction longitudinale du rail (7), qui est suffisamment importante afin de permettre à l'élément de guidage de reposer sur plus d'un mais, de préférence, trois rails adjacents.

3. Dispositif selon la revendication 2, **caractérisé en ce que** le dispositif de nettoyage (3) s'étend à travers une ouverture dans l'élément de guidage (1) qui est sous la forme d'une plaque, le dispositif de nettoyage étant mobile vers et à partir de la plaque.

4. Dispositif selon la revendication 3, **caractérisé en ce que** le dispositif de nettoyage (3) peut être déplacé approximativement à angle droit par rapport à la plaque (1) suivant un mouvement alternatif linéaire.

5. Dispositif selon l'une quelconque des revendications 2 à 4, **caractérisé en ce que** le dispositif de nettoyage (3) est sous la forme d'une fourchette qui est disposée de manière à enfourcher le rail (7).

6. Dispositif selon la revendication 5, **caractérisé en ce que** les moyens de couplage (5) sont sous la forme d'une denture qui est disposée sur les faces des dents (8, 9) de la fourchette orientées l'une vers l'autre.

7. Dispositif selon la revendication 5 ou 6, **caractérisé en ce que** la largeur libre intérieurement à la fourchette est approximativement égale à 1,2 à 1,7 fois l'épaisseur du rail (7).

8. Dispositif selon la revendication 7, **caractérisé en ce que** la denture (5) présente des surfaces de couplage supérieures (11) qui sont orientées transversalement par rapport aux mouvements alternatifs du dispositif de nettoyage (3), et des surfaces inférieures (13) qui forment un angle aigu avec cette direction.

9. Dispositif selon l'une quelconque des revendications 1 ou 2, **caractérisé en ce que** le dispositif de nettoyage comporte deux disques (31, 32) ou corps rotatifs, un de chaque côté du rail (7), lesdits corps pouvant tourner autour d'un axe commun (34) qui est sensiblement parallèle à un plan support pour l'agencement de support et qui est dirigé transversalement par rapport à la direction longitudinale du rail (7).

10. Dispositif selon la revendication 9, **caractérisé en ce que** les moyens de couplage (5) sont disposés sur les surfaces mutuellement en regard des corps,

11. Dispositif selon la revendication 9 ou 10, **caractérisé en ce que** la distance libre entre les corps (31, 32) est approximativement égale à 1,2 à 1,7 fois l'épaisseur du rail (7).

12. Dispositif selon l'une quelconque des revendications 9 à 11, **caractérisé en ce que** les corps (31, 32) peuvent tourner dans un sens, de sorte que le moyen de couplage (5) du côté des corps qui est tourné afin de faire face vers l'avant du mouvement (10) de l'élément de guidage (1) le long du rail (7) se déplace au moins partiellement à partir du rail vers l'élément de guidage qui est sous la forme d'une plaque.

13. Dispositif selon l'une quelconque des revendications 1 ou 2, **caractérisé en ce que** le dispositif de nettoyage comporte un corps rotatif disposé de chaque côté du rail (7), chacun des corps pouvant tourner autour d'axes sensiblement mutuellement parallèles qui sont sensiblement parallèles aux surfaces latérales du rail et qui sont inclinés de sorte que leurs parties situées à une certaine distance de l'élément de guidage (1) sont situées au-dessus d'autres parties vues dans la direction du déplacement (10) de l'élément de guidage (1).

14. Dispositif selon la revendication 13, **caractérisé en ce que** les corps présentent des surfaces circonférentielles sensiblement cylindriques et **en ce que** les éléments de couplage sont disposés sur ces dernières.

15. Dispositif selon la revendication 13 ou 14, **caractérisé en ce que** la distance libre entre les corps est approximativement égale à 1,2 à 1,7 fois l'épaisseur du rail (7).

16. Dispositif selon l'une quelconque des revendications 13 à 15, **caractérisé en ce que** les corps peuvent tourner dans des sens opposés de sorte que les faces des corps orientées vers le rail (7) se déplacent vers l'avant (10) dans la direction du déplacement de l'élément de guidage (1).

17. Dispositif selon l'une quelconque des revendications 13 à 16, **caractérisé en ce que** les moyens de couplage sont disposés sous forme hélicoïdale sur les surfaces circonférentielles des corps dans le but d'exercer un effort sur les produits formant déchet (6) qui est dirigé au moins partiellement à partir du rail (7) vers l'élément de guidage (1), qui est sous la forme d'une plaque.

18. Procédé d'élimination d'impuretés ou de produits formant déchet (6) tels que des scories à partir d'un élément de support (7) qui est utilisé afin de supporter une pièce d'oeuvre pendant son traitement et qui, au cours du traitement, est chargé d'une couche ou d'un revêtement plus ou moins en tas ou irrégulier de produits formant déchet adhérants, **caractérisé en ce qu'**un dispositif de nettoyage (3 ; 31, 32) est déplacé le long de l'élément de support (7) et est amené en contact avec les produits formant déchets (6) adhérant sur celui-ci et à agir sur ces derniers au moins dans une direction qui est sensiblement opposée à la direction dans laquelle les produits formant déchet sont déposés sur l'élément de support (7).

19. Procédé selon la revendication 18, **caractérisé en ce que** le dispositif de nettoyage (3 ; 31, 32) est amené à agir sur les produits formant déchet (6) dans un ou plusieurs sens, ce qui réalise sensiblement un cisaillement entre les produits formant déchet (6) et l'élément de support (7).

20. Procédé selon la revendication 18 ou 19, **caractérisé en ce que** le dispositif de nettoyage (3 ; 31, 32) est amené à agir sur les produits formant déchet (6) adhérant sur des faces opposés de l'élément de support (7) de manière sensiblement simultanément et synchronisée.

21. Procédé selon l'une quelconque des revendications 18 à 20, **caractérisé en ce que** le dispositif de nettoyage (3 ; 31, 32) est déplacé suivant la direction longitudinale de l'élément de support (7) au moins dans un sens de déplacement (10).

22. Procédé selon l'une quelconque des revendications 18 à 21, **caractérisé en ce que** le dispositif de nettoyage (3 ; 31, 32) est amené à agir sur les produits formant déchet (6) dans une direction qui est sensiblement orientée suivant la direction longitudinale de l'élément de support (7).
